# EUROPÄISCHE PATENTANMELDUNG

(11) **EP 2 436 616 A1**
(43) Veröffentlichungstag der Anmeldung: **04.04.2012**
(21) Anmeldenummer: 11183545.0
(22) Anmeldetag: 30.09.2011
(51) Int. Cl.: B65F 1/10, B65F 1/12, B65F 1/14, B65F 7/00

(54) **Schleusenkammerbehälter mit integrierter Pressvorrichtung**

(30) Priorität: 04.10.2010 DE 202010013818 U
(71) Anmelder: Paul Wolff GmbH, 41068 Mönchengladbach (DE)
(72) Erfinder: Menzel, Dr. Hanns, 40213 Düsseldorf (DE)
(74) Vertreter: Sokolowski, Fabian

(57) **Zusammenfassung**

Die Erfindung betrifft einen Schleusenkammerbehälter für die Aufnahme von Müll, wobei eine integrierte Pressvorrichtung, die den eingeworfenen Müll in dem Schleusenkammerbehälter (1) komprimiert.

## Beschreibung

Täglich fallen großen Mengen an Müll, insbesondere in den Haushalten an. Die Entsorgung von Müll ist eine personenintensive Aufgabe. Dadurch bedingt ist eine Müllentsorgung kostenintensiv. In Müllbehältern existiert häufig ein großes Leervolumen. Der in einen Müllbehälter eingeworfene Müll verteilt sich, aufgrund der unterschiedlichen Größen der einzelnen Müllteile, in dem Müllsammelbehälter unter Einschluss größerer Luftmengen. Eine optimale Füllung des Müllbehälters ist nicht gegeben. Dies führt zu mehrfachen und kostenintensiven Abholvorgängen durch die Entsorger.

Die bekannte Art, den Müll in den Müllbehälter zu pressen und somit das Volumen zu reduzieren, eignet sich nicht als kostengünstige Alternative, um das Volumen des Mülls zu reduzieren. Durch das Pressen der gesamten Müllmenge muss die Presse einen sehr hohen Widerstand überwinden. Man benötigt dementsprechend eine leistungsstarke und kostenintensive Presse. Derartige Pressen haben einen deutlichen Platzverbrauch, der sich kontraproduktiv zu dem Ziel einer Maximierung der Müllaufnahmefähigkeit auswirkt. Der durch die Presse beanspruchte Raum geht dem Lagervolumen des Mülls verloren.

Der Erfindung liegt die Aufgabe zugrunde, einen Schleusenkammerbehälter und eine Müllsammelvorrichtung mit dem erfindungsgemäßen Schleusenkammerbehälter zu schaffen, die es ermöglichen das Müllvolumen und die Gesamtkosten der Entsorgung zu verringern.

Erfindungsgemäß wird die Aufgabe durch die kennzeichnenden Merkmale des Anspruches 1 bzw. 5 gelöst.

Der Schleusenkammerbehälter für die Aufnahme von Müll weist eine integrierte Pressvorrichtung auf. Das Volumen des Schleusenkammerbehälters liegt vorteilhafterweise in einem Bereich von ca. 20 bis 30 Liter. Allerdings ist der Schleusenkammerbehälter nicht explizit auf dieses Volumen beschränkt. Das Volumen kann je nach Bedarf auch größer oder kleiner sein.

Die Pressvorrichtung kann vorteilhafterweise durch einen Spindelantrieb, einen Hydraulikantrieb oder manuell betrieben werden. Vorteilhafterweise wird die Pressvorrichtung mittels eines Elektromotors betrieben. Durch die integrierte Presse wird der eingeworfene Müll direkt in dem Schleusenkammerbehälter komprimiert. Das entsprechende Müllvolumen ist durch die Größe des Schleusenkammerbehälters begrenzt. Dadurch wird nur ein begrenzter Pressfaktor zum Komprimieren des Mülls benötigt. Demzufolge verfügt die Pressvorrichtung auch über einen geringen Raumbedarf. Der eingeworfene Müll kann zu Pellets gepresst werden. Eine Lagerung von komprimierten Pellets ermöglicht eine deutliche Reduktion des Müllvolumens. Bevorzugt haben die Pellets eine runde oder quaderähnliche Struktur. Derartige Strukturen haben bei einem Aufeinanderlagern grundsätzlich ein geringes Leervolumen zwischen den einzelnen Pellets.

Der derart komprimierte Müll kann, mittels eines in dem Schleusenkammerbehälter angeordneten Schleusenausgangs, in einen darunter angeordneten Müllsammelbehälter überführt werden. Allerdings ist eine Anordnung nur eines Schleusenkammerausgangs nicht zwingend. Alternativ kann der Schleusenkammerbehälter auch über zwei oder mehr Ausgänge verfügen, die über Kanäle mit entsprechenden Müllsammelbehältern verbunden sind. Dies ermöglicht die Verwendung nur eines Schleusekammerbehälters mit integrierter Presse für verschiedene Müllsammelbehälter. Die verschiedenen Müllsammelbehälter können unterschiedlichen Nutzern zugeordnet werden. Eine derartige Anordnung wurde die Investitionskosten senken. Weiterhin würde dies zu einer Reduktion der Stellplätze führen und dadurch das Stadtbild verschönern.

Weiterhin ist es möglich, ein Eingabesystem an dem Schleusenkammerbehälter anzubringen. Das Eingabesystem ermöglicht eine Auswahl der Müllart, die in den Schleusenkammerbehälter gegeben werden soll. Das Eingabesystem ist mit den oben beschriebenen verschiedenen Schleusenkammerausgängen gekoppelt und ermöglicht eine Zuordnung der verschiedenen Müllsorten, wie zum Beispiel Restmüll, Papier, Glas, Biomüll und Verpackungen, in dafür vorgesehene Müllsammelbehälter, über nur einen Schleusenkammerbehälter.

Weiterhin ist es möglich, dass der Schleusenkammerbehälter vor der integrierten Presse eine Zerkleinerungsvorrichtung aufweist. Dies kann durch einen Häcksler erfolgen. Durch den derart verkleinerten Müll wird der benötigte Pressfaktor weiter verringert.

In einer Ausführungsform weist der Schleusenkammerbehälter ein Solarmodul auf. Dadurch wird eine dezentrale Stromerzeugung erreicht. Der derart erzeugte Strom kann zum Betrieb der Pressvorrichtung verwendet werden.

In einer weiteren Ausführungsform weist der Schleusenkammerbehälter eine Trennungsvorrichtung für Feststoffe und Flüssigkeiten auf. Häufig ist Müll, insbesondere Haushaltsmüll, eine Mischung aus anorganischen und organischen Substanzen. Durch ein komprimieren des Mülls werden die flüssigen von den festen Bestandteilen getrennt. Diese beiden Phasen werden mittels einer Trennvorrichtung separiert.

Dies kann durch einen kleinen Kanal am Boden des Schleusenkammerbehälters, der eine davor angeordnete Siebvorrichtung aufweist, erfolgen. Die beim Pressen entstandene Flüssigkeit wird somit von dem Feststoff getrennt und kann getrennt gelagert und/oder entsorgt werden. Ein solches Verfahren wirkt sich geruchsmindernd aus. Insbesondere aus Flüssigkeiten sondern sich besonders leicht Geruchsstoffe ab. Durch eine getrennte Lagerung in luftdicht verschließbaren Flüssigkeitsbehältern kann dieser Geruchsentwicklung entgegengewirkt werden.

Weiterhin wird durch diese Trennung eine Keim- und Fäulnisbildung, in einem unter dem Schleusenkammerbehälter angeordneten Müllsammelbehälter, nahezu unterbunden, da eine derartige Bildung durch die Anwesenheit von Flüssigkeiten begünstigt wird.

In einer weiteren Ausführungsform ist der Schleusenkammerbehälter in eine Einhausung integriert. Die Einhausung besteht vorteilhafterweise aus Beton, Stahl oder Kunststoff sowie aus einer Kombination davon. Sie ist allerdings nicht auf das genannte Material beschränkt und kann je nach Bedarf auch anderes Material, wie beispielsweise Stein, Blech oder Holz, aufweisen. Durch eine Einhausung wird Schutz vor Witterung oder Vandalismus gewährleistet. Auch ist es denkbar, dass die Einhausung mit einem farbabweisenden Material behandelt wird, um Graffiti zu verhindern.

Die Einhausung kann den Schleusenkammerbehälter und/oder den Müllsammelbehälter ganz oder nur teilweise umschließen.

Vorteilhafterweise wird bei einer derartigen Integration des Schleusenkammerbehälters durch die Einhausung eine Gegenkraft für die Pressvorrichtung bereitgestellt.

In eine Ausführungsform weist der Schleusenkammerbehälter eine Einwurfsicherung auf. Der Schleusenkammerbehälter ist mittels eines Schleusenkammerverschlusses verschließbar und verriegelbar.

Der Schleusenkammerverschluss weist eine erste Verriegelung auf, die mit einer zweiten Verriegelung für den Schleusenkammerausgang in Wirkstellung steht. Die Verriegelung des Schleusenkammerverschlusses und des Schleusenkammerausgangs sind derart miteinander gekoppelt, dass der Schleusenkammerausgang nur bei geschlossenem Schleusenkammerverschluss geöffnet werden kann und umgekehrt. Wenn der Schleusenkammerausgang nicht geschlossen ist und der Schleusenkammerbehälter daher nicht zur Aufnahme von Müll eingerichtet ist, lässt sich der Verschluss des Schleusenkammerverschlusses nicht entriegeln.

Dabei stehen über eine Steuerung der Schleusenkammerverschluss und der Schleusenkammerausgang mit der Pressvorrichtung in Wirkverbindung.

Bei einem geöffneten Schleusenkammerverschluss lässt sich die Pressvorrichtung nicht in Betrieb nehmen. Weiterhin kann der Schleusenkammerausgang nur nach dem Schließen und Verriegeln des Schleusenkammerverschlusses und dem Abschluss des Pressvorgangs entriegelt werden. Daher kann der Schleusenkammerausgang nur bei geschlossenem und verriegeltem Schleusenkammerverschluss und nach Beenden des Pressvorgangs zum Entleeren geöffnet werden.

Ein Betrieb der Pressvorrichtung ist somit nur bei geschlossenem und verriegeltem Schleusenkammerverschluss und geschlossenem Schleusenkammerausgang möglich.

Eine Verriegelung kann mechanisch erfolgen. Auch ist eine Verriegelung durch Magnetverschlüsse, vorzugsweise mittels Elektromagnete, die einen Magnetkern aufweisen, möglich. Die Magnete lassen sich somit elektrisch ent- oder ummagnetisieren. Dadurch wird die magnetische Verriegelung hergestellt oder aufgehoben.

Zur Betätigung der Verriegelung des Schleusenkammerverschlusses ist ein Identifizierungssystem vorgesehen. Dazu wäre ein Chipkarten-Lesegerät oder auch ein Transponder-Empfangsgerät geeignet. Jeder autorisierte Benutzer des Müllbehälters erhält zur Identifizierung eine Chipkarte oder einen Transponder, in der ein für den jeweiligen Benutzer charakteristischer Code gespeichert ist. Auch andere Identifizierungssysteme sind denkbar, wie ein individueller PIN-Code für den jeweiligen Benutzer. Auch Barcodes oder eine Signalübermittlung mittels eines Handys sind denkbar. Dadurch kann jede Entriegelung des Schleusenkammerverschlusses personengebunden elektronisch registriert und Unberechtigten der Zugang verwehrt werden. Hierdurch ist es möglich, eine personen- oder benutzerbezogene eindeutige Mengenabrechnung zu erstellen.

Im Ruhestand, d.h., vor dem Aktivieren des Identifizierungssystems, wie beispielsweise durch Einführen der Chipkarte, sind der Schleusenkammerverschluss und der Schleusenkammerausgang verriegelt. Nach dem Aktivieren des Identifizierungssystems, lässt sich der Schleusenkammerverschluss zur Aufnahme von Müll öffnen.

Bei einer beispielsweise magnetischen Verriegelung wird der Magnetverschluss des Schleusenkammerverschlusses durch das Aktivieren des Identifizierungssystems in seiner Magnetisierungsrichtung geändert. Der Magnetverschluss mit dem der Schleusenkammerausgang verriegelt ist, wird erst geöffnet, wenn der Magnetverschluss des Schleusenkammerverschlusses wieder geschlossen wurde. Dasselbe gilt auch in umgekehrter Richtung. Wie bereits oben erwähnt, ist eine Betätigung der Pressvorrichtung nur bei geschlossenem Schleusenkammerverschluss und Schleusenkammerausgangs möglich.

Dadurch wird vermieden, dass Unberechtigte die Müllsammelanlage verwenden. Auch eine genaue personengebundene Abrechnung der einzelnen Müllmengen wird gewährleiste. Durch die gekoppelten Verschlussmechanismen wird weiterhin jegliche Verletzungsgefahr, die durch die integrierte Presse verursacht werden könnte, ausgeschlossen.

Ein vorteilhafterweise zur Entleerung des Schleusenkammerbehälters vorgesehenes Hebelsystem kann bedienungsfreundlich neben dem Schleusenkammerverschluss angeordnet sein. Zur Entleerung des Schleusenkammerbehälters kann aber auch ein durch einen Elektromotor betriebener Betätigungsmechanismus vorgesehen sein. Dabei ist der Betätigungsmechanismus vorzugsweise selbsthemmend ausgebildet, sodass er bei abgeschaltetem Motor der Entleerung des Schleusenkammerbehälters entgegenwirkt und damit gleichzeitig zur Verriegelung des Schleusenkammerbehälters dient. Die Entleerung des Schleusenkammerbehälters kann auch automatisch, nach dem Abschluss des Pressvorgangs, erfolgen.

Die Öffnung des Schleusendeckels kann bedienerfreundlich mittels eines Fußrasters oder mittels des oben beschriebenen Identifizierungssystems automatisch erfolgen.

Um eine zuverlässige Erfassung der in den Müllbehälter eingeworfenen Müllmengen zu gewährleisten, kann der Schleusenkammerbehälter ein vorbestimmtes, definiertes Volumen aufweisen. Zur Aufnahme von Hausmüll dürfte ein Volumen von 20 1 bis 30 1 besonders geeignet sein.

Gerade Hausmüll und gewerblicher Müll, beispielsweise aus Gaststätten, weist einen großen Anteil an organischen Komponenten auf. Diese organischen Komponenten beginnen bereits nach einer kurzen Zeit mit ihrer Zersetzung oder beginnen zu faulen. Die sich dabei entwickelnden Faul- und Zersetzungsgase sind für die Geruchsbelästigung in der Nähe von Müllbehältern verantwortlich.

Demgemäß sind an dem Schleusenkammerbehälter ein Reinigungssystem und/oder ein Desinfizierungssystem und/oder ein Entkeimungssystem angeordnet.

Eine Verringerung der Geruchsbelästigung wird durch eine Reinigung des Schleusenkammerbehälters nach dem Pressen und Zuführen des Mülls in den Müllsammelbehälter erreicht. Dadurch werden Müllreste aus dem Schleusenkammerbehälter entfernt und eine Geruchsbelästigung beim Öffnen des Schleusenkammerbehälters wird vermieden. Dies kann durch einfaches Spülen mit Wasser erfolgen. Auch eine Heißwasser-oder Dampfreinigung ist denkbar. Die Reinigung kann auch unter Zusatz von Reinigungsmitteln, wie beispielsweise Tensiden erfolgen.

Durch die Entkeimung und/oder Desinfizierung des Mülls und/oder des Schleusenkammerbehälters kann die Geruchsbelästigung verringert werden, da Faul- und Zersetzungsprozesse verzögert oder verhindert werden.

Eine Desinfektion ist vorteilhafterweise durch eine Sprühvorrichtung zum Besprühen des Mülls mit mindestens einer Desinfektionsflüssigkeit oder eines Desinfektionsgas möglich. Dabei ist von Vorteil, an der Müllsammelvorrichtung oder in dem Schleusenkammerbehälter ein Tank zur Aufnahme der Desinfektionsflüssigkeit, eine Pumpvorrichtung, Dichtmittel, eine Dosiervorrichtung, ein Ventil und/oder eine Steuervorrichtung zur Steuerung des Desinfektionsvorgangs vorzusehen. Auf diese Weise kann der Müll einfach mit bekannten Desinfektionsflüssigkeiten behandelt werden. Vorteilhafterweise wird als desinfizierendes Gas Ozon verwendet, das zum Beispiel durch eine Ozon-Lampe erzeugt wird.

Auch eine Behandlung des Mülls mit Heißdampf mittels einer Vorrichtung zur Erzeugung von Heißdampf kann vorgesehen sein. Mit Vorteil ist zusätzlich eine Vorrichtung zur Erzeugung von Überdruck vorgesehen, sodass die Behandlung des Mülls mit Heißdampf unter Überdruck durchführbar ist. Auf diese Weise lässt sich der Müll mithilfe von Heißdampf und Überdruck sterilisieren.

Auch eine Vorrichtung zur Erzeugung von Mikrowellen ist denkbar. Der Müll kann so durch eine Mikrowellenbehandlung entkeimt werden. Mit Vorteil ist dabei der Schleusenkammerbehälter gasdicht, druckdicht und/oder undurchlässig für Mikrowellen ausgebildet.

Es ist dabei von Vorteil, einen Schalter an dem Müllbehälterschrank vorzusehen, mit dem die Öffnung einer Tür des Müllbehälterschranks detektiert werden kann, insbesondere zur Übermittlung an eine Steuervorrichtung. Weiterhin vorteilhaft ist, an dem Müllbehälterschrank einen Sensor vorzusehen, mit dem ein Mülleinwurf detektiert werden kann. Die Desinfektions- und/oder Entkeimungsvorgänge können so sicher gesteuert werden und sind gegenüber der Umgebung abgeschlossen. Es können keine schädlichen Gase entweichen und die Umgebung wird nicht mit Strahlung belastet.

Da die Geruchsbelästigung mit der Temperaturerhöhung zunimmt, ist es möglich die Einhausung und oder den Schleusenkammerbehälter wärmedämmend auszuführen. Beispielsweise mittels einer Dämmschicht wie z. B. Schaumkunststoff.

Die Aufgabe wird weiterhin mittels einer Müllsammelvorrichtung, an der der erfindungsgemäße Schleusenkammerbehälter mit der integrierten Pressvorrichtung angeordnet ist, gelöst.

Die Müllsammelvorrichtung ist von einer Einhausung ganz oder nur teilweise umschlossen. Die Einhausung kann aus dem oben aufgeführten Material bestehen und die oben aufgeführten Eigenschaften und Vorteile aufweisen.

Die Müllsammelvorrichtung weist mindestens einen Müllsammelbehälter auf, der unterhalb des Schleusenkammerausgangs angeordnet ist. Der Müllsammelbehälter ist mobil gelagert und mit der Einhausung koppelbar. Eine Kopplung kann über ein Einklinken in entsprechende Halterungen an der Einhausung erfolgen. Das Einklinken erfolgt derart, vorteilhafterweise am Schüttungskamm, dass eine vandalismussichere Kopplung erreicht wird. Ein zusätzliches Verriegeln gibt weitere Sicherheit. Die Entriegelung kann über einen Dreikantschlüssel erfolgen. Auch eine Verwendung mehrerer Müllsammelbehälter in einer Müllsammelvorrichtung sind denkbar.

Im entkoppelten Zustand ist ein Entfernen des Müllsammelbehälters aus der Müllsammelvorrichtung und Entleeren des Müllsammelbehälters möglich. Ein Müllsammelbehälter kann ein Norm-Müllgroßbehälter mit Flachdeckel und Schüttvorrichtung sein.

In einer weiteren Ausführungsform weist der Müllsammelbehälter und/oder die Einhausung eine Höhenverstellungsvorrichtung auf. Die Höhenverstellungsvorrichtung kann aus Teleskopstelzen oder einer Plattform bestehen. Der Abstand des Müllsammelbehälters zum Schleusenkammerausgang kann, nach dem Einführen des Müllsammelbehälters unter den Schleusenkammerausgang, mittels der Höhenverstellung verringert werden. Alternativ kann der Müllsammelbehälter mit dem Schleusenkammerausgang in Kontakt gebracht werden. Dies ermöglicht eine Reduktion der Freiräume zwischen dem Schleusenkammerausgang und dem Müllsammelbehälter. Dadurch wird ein besserer Schutz gegen Witterung gewährleistet und die Menge des Fehleinwurfs wird erheblich reduziert.

Bei einem Entsorgungsvorgang kann der Abstand zwischen dem Schleusenkammerausgang und dem Müllsammelbehälter mittels der Höhenverstellung wieder reduziert werden. Somit wird ein einfaches Entfernen des Müllsammelbehälters gewährleistet. Weiterhin ist es möglich, dass der Schleusenkammerausgang und der Müllsammelbehälter Dichtmittel aufweisen, die derart miteinander koppelbar sind, dass ein luftdichter Verschluss des Schleusenkammerausgangs mit dem Müllsammelbehälter möglich ist. Dadurch kann der Geruch erheblich vermindert werden.

Alternativ oder zusätzlich weist die Müllsammelvorrichtung an dem Müllsammelbehälter ein- und ausfahrbare Bewegungselemente auf. Dadurch wird gewährleistet, dass die Höhe der Müllsammelvorrichtung ein benutzerfreundliches Niveau aufweist, ohne dabei Lagerraum für Müll zu verschwenden. Der Müllsammelbehälter kann mittels einer ausfahrbaren Plattform aus der Müllsammelvorrichtung bewegt werden. Im Anschluss daran können die Bewegungselemente, wie beispielsweise Räder, zum Abtransport ausgefahren werden.

In einer alternativen Ausführungsform weist die Müllsammelvorrichtung ein Führungssystem für den Müllsammelbehälter auf. Das Führungssystem erleichtert das Ein- und Ausführen des Müllsammelbehälters. Dadurch wird ein Beschädigen der Müllsammelvorrichtung oder des Müllsammelbehälters vermieden. Ein Führungssystem kann aus Führungsschienen bestehen. Der Müllsammelbehälter kann aber auch auf einer ausfahrbaren Plattform angeordnet sei.

In einer weiteren Ausführungsform weist die Müllsammelvorrichtung einen Füllstandsensor auf. Der Füllstandsensor meldet einen voreingestellten Füllstand, wenn beispielsweise 75 % des Lagervolumens verbraucht sind, an eine Zentrale. Dadurch wird gewährleistet, dass nur noch volle Müllsammelvorrichtungen geleert und unnötige Fahrten vermieden werden. Folglich wird die Umweltbelastung durch CO₂ verringert und die Abholungskosten reduziert.

In einer Ausführungsform sind an den Öffnungen der Müllsammelvorrichtung Dichtmittel vorgesehen, die einen luftdichten Verschluss ermöglichen. Dadurch wird einer Verbreitung des Geruchs des Mülls vorgebeugt.

Weiterhin ist es möglich, dass die Müllsammelvorrichtung einen Abluftfilter aufweist. Durch den Einbau eines auswechselbaren Abluftfilters wird eine Verminderung der Geruchsbelästigung erzielt. In einfacher Form kann der Abluftfilter mit einem oberflächenaktiven Material, z. B. Aktivkohle gefüllt sein. Ebenso ist es möglich, als Abluftfilter einen Biofilter einzusetzen. Im Biofilter erfolgt ein Schadstoffabbau durch Mikroorganismen, die auf einem festen Träger angesiedelt sind. Als Trägermaterial können übliche Materialien mit großer Oberfläche eingesetzt werden. Die luftverunreinigenden Stoffe aus der Abluft werden auf der Oberfläche der Trägersubstanz durch die Mikroorganismen abgebaut.

In einer Ausführungsform ist an der Müllsammelvorrichtung ein Verbindungselement, wie ein Haken, eine Öse oder eine Öffnung, vorgesehen. Das Verbindungselement ermöglicht eine Verbindung der Müllsammelvorrichtung oder von Teilen der Müllsammelvorrichtung mit einem externen Transportsystem. Vorteilhafterweise kann dadurch der Müllsammelbehälter oder die Müllsammelvorrichtung mittels eines Krans transportiert werden.

Dabei ist es vorteilhaft, wenn der Schleusenkammerbehälter derart mobil gelagert ist, dass er vor einer Entsorgung von dem Müllsammelbehälter getrennt werden kann. Dadurch wird gewährleistet, dass die der Schleusenkammerbehälter mit der integrierten Presse nicht transportiert werden muss.

Vorteilhafterweise ist die Bodenfläche der Müllsammelvorrichtung oder des Müllsammelbehälters zu öffnen. Eine Öffnung kann durch Aufklappen erfolgen. Dadurch wird gewährleistet, dass die Entsorgung des Mülls auf einfache Art und Weise erfolgen kann. Die Müllsammelvorrichtung wird vorteilhafterweise mittels eines Krans über einen Müllwagen gehoben und durch Entriegeln der Bodenfläche in den Müllwagen entleert. Derartige Müllentleerung ist zeit- kosteneffektiv, da sie es ermöglicht große Mengen Müll mit nur einer Person zu entsorgen.

Weiterhin ist es vorteilhaft, dass die Müllsammelvorrichtung oder Teile davon im Boden eingelassen sind. Dies ermöglicht eine Verwendung großer Müllsammelbehälter, ohne dabei einen großen Raumanspruch an eine Oberfläche, wie beispielsweise auf einem Gehweg, zu haben. Dadurch kann der Bedarf eines Straßenzuges mit weniger Müllsammelvorrichtungen gedeckt werden. Auch ein ergonomisches Anbringen der Schleusenkammeröffnung in einer definierten Höhe, die ein bedienerfreundliches Einwerfen des Mülls für Kinder oder Rollstuhlfahrer ermöglicht, ist dadurch gewährleistet.

Zur Entsorgung des Mülls wird eine derartig gelagerte Müllsammelvorrichtung mittels einer Transportvorrichtung auf Straßenniveau gebracht. Dies kann mittels einer Hebebühne erfolgen. Auch eine Entsorgung über eine Verbindungsvorrichtung, zum Koppeln mit einer Transportvorrichtung, wie oben beschrieben, ist möglich.

Vorteilhafterweise verfügen derartige, im Boden eingelassene, Müllsammelvorrichtungen über ein Führungssystem. Das Führungssystem ermöglicht ein einfaches und passgenaues Entfernen und Wiedereinsetzen der Müllsammelvorrichtung oder Teile der Müllsammelvorrichtung in die Bodenöffnung.

Weiterhin weisen die teilweise oder vollständig im Boden eingelassenen Müllsammelvorrichtungen eine Sicherheitsvorrichtung auf. Die Sicherheitsvorrichtung verschließt die Bodenöffnung vollständig, sobald die Müllsammelvorrichtung auf Straßenniveau gebracht wird. Dadurch wird Sicherheit für Passenten während der Entsorgung gewährleistet. Auch wird die Bodenöffnung vor Witterung und Schmutz geschützt, sodass jederzeit ein reibungsloses Einpassen der Müllsammelvorrichtung oder Teilen davon in die Bodenöffnung gewährleistet wird.

Eine Entsorgung des Mülls in einer erfindungsgemäßen Müllsammelvorrichtung kann auch mittels des bekannten U-Select-Verfahrens erfolgen.

In einer Ausführungsform weist die Müllsammelvorrichtung und/oder die Einhausung ein LED-Modul auf. Das LED-Modul kann dazu verwendet werden aktuelle Nachrichten anzuzeigen. Vorteilhafterweise kann das LED-Modul dazu verwendet werden ein Halteverbot anzuzeigen, sollte eine Entsorgung des Mülls geplant sein. Dadurch wird gewährleistet, dass das Entsorgungsfahrzeug ungehinderten Zugang zur Müllsammelvorrichtung hat, ohne dabei auf ein permanentes Halteverbot zurückgreifen zu müssen. Dadurch werden knappe Parkplatzressourcen geschont.

In einer Ausführungsform weist die Müllsammelvorrichtung ein Solarmodul auf. Dadurch wird eine dezentrale Stromerzeugung erreicht. Der derart erzeugte Strom kann zum Betrieb des LED-Moduls verwendet werden.

In einer weiteren Ausführungsform kann an der Müllsammelvorrichtung eine Werbefläche angebracht werden.

Weiterhin ist es vorteilhaft, wenn die Müllsammelvorrichtung und/oder die Einhausung ästhetisch an die Umgebung angepasst sind. Ein derartige Anpassung an das Stadt- und Straßenbild ist für eine Akzeptanz der Müllsammelvorrichtung wichtig. Dies kann durch Verwendung ähnlicher Materialien, die in der Umgebung vorliegen, erfolgen. Auch eine Anpassung des Designs an die Umgebungsverhältnisse ist möglich. Weiterhin ist es möglich, dass in die Müllsammelvorrichtung Elemente des Straßenbildes integriert werden. Dies kann vorteilhafterweise durch Fahrradständer, Bänke, Bäume, Straßenbeleuchtungen oder Bushaltestellen erfolgen.

In einer weiteren Ausführungsform ist die Müllsammelvorrichtung in einem Sammelraum mit offenem oder bewegbarem Dach angeordnet. Eine Entsorgung kann, wie oben beschrieben, mittels eines Krans erfolgen. Auch können die Müllsammelbehälter im Sammelraum im Boden eingelassen sein.

Innerhalb des Sammelraumes ist Platz für weitere Angebote und Vorrichtungen, wie beispielsweise öffentliche Toiletten, einen Kiosk, Streugutlagerung, Bushaltestellen oder Schutzräume gegen Witterung, vorgesehen.

In einer weiteren Ausführungsform ist die Schleusenkammeröffnung der Müllsammelvorrichtung in die Wand des Sammelraumes integriert. Dadurch kann der Einwurf des Mülls im Freien erfolgen und man muss den Sammelraum nicht betreten.

Die Erfindung wird nachfolgend unter Bezugnahme auf die Figuren der Zeichnung an mehreren Ausführungsbeispielen näher erläutert. Es zeigen:
- Figur 1:: Ein Ausführungsbeispiel einer Müllsammelvorrichtung;
- Figur 2:: Eine Seitenansicht der Müllsammelvorrichtung der Figur 1;
- Figur 3:: Ein zweites Ausführungsbeispiel einer Müllsammelvorrichtung;
- Figur 4:: Ein Sammelraum mit Müllsammelvorrichtungen.

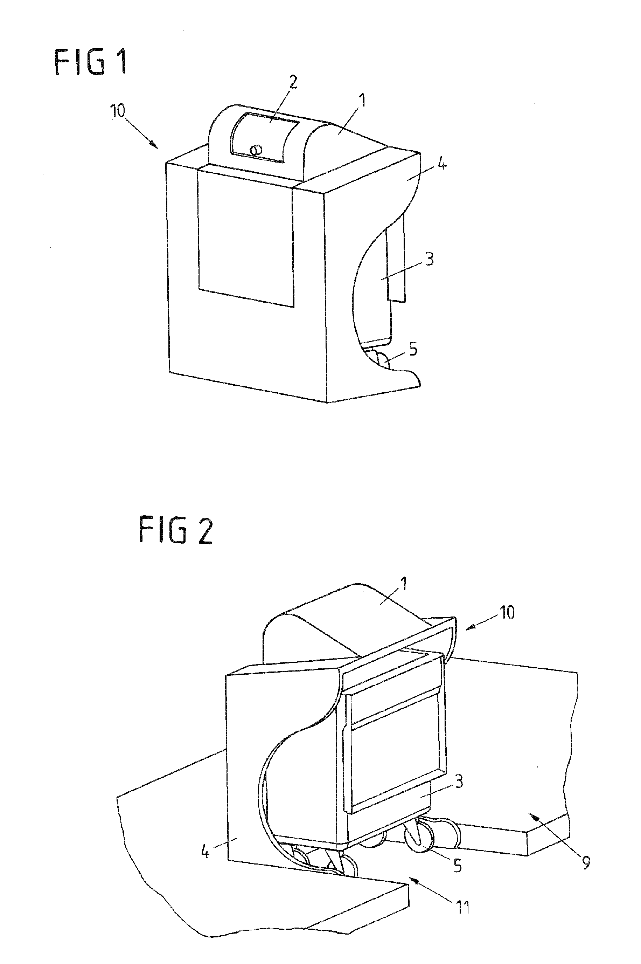

Die Figur 1 zeigt ein erstes Ausführungsbeispiel einer Müllsammelvorrichtung 10. Der Schleusenkammerbehälter 1 mit integrierter Pressvorrichtung für die Aufnahme von Müll ist an der Müllsammelvorrichtung 10 angeordnet. Die integrierte Pressvorrichtung ist aus Gründen der Anschaulichkeit nicht abgebildet.

Der Schleusenkammerbehälter 1 ist in eine Einhausung 4 integriert und die Einhausung 4 umschließt den Müllsammelbehälter 3 teilweise. Die Einhausung 4 kann aus Beton, Stahl oder Kunststoff bestehen. Auch eine Kombination aus den genanten Materialien ist möglich. Die Einhausung 4 schützt den Müllsammelbehälter 3 vor Witterung oder Vandalismus. Durch die Integration des Schleusenkammerbehälters 1 wird durch die Einhausung 4 eine Gegenkraft für die Pressvorrichtung bereitgestellt.

Der Schleusenkammerbehälter 3 weist einen Schleusenkammerverschluss 2 auf. Der Schleusenkammerbehälter 1 ist mittels des Schleusenkammerverschlusses 2 verschließbar und verriegelbar.

Wesentlich ist, dass über eine Steuerung der Schleusenkammerverschluss 2 und der Schleusenkammerausgang mit der Pressvorrichtung in Wirkverbindung stehen. Bei einem geöffneten Schleusenkammerverschluss 2 lässt sich die Pressvorrichtung nicht in Betrieb nehmen.

Wenn der Schleusenkammerausgang nicht geschlossen ist und der Schleusenkammerbehälter 1 daher nicht zur Aufnahme von Müll eingerichtet ist, lässt sich der Schleusenkammerverschluss 2 nicht entriegeln.

Umgekehrt kann der Verschluss des Schleusenkammerausgangs nur nach dem Schließen und Verriegeln des Schleusenkammerverschlusses 2 und dem Abschluss des Pressvorgangs entriegelt werden.

Ein Betrieb der Pressvorrichtung ist somit nur bei geschlossenem und verriegeltem Schleusenkammerverschluss 2 und geschlossenem Schleusenkammerausgang möglich. Durch die gekoppelten Verschlussmechanismen wird weiterhin jegliche Verletzungsgefahr die durch die integrierte Presse verursacht werden könnte, ausgeschlossen.

Durch die integrierte Pressvorrichtung wird der eingeworfene Müll direkt in dem Schleusenkammerbehälter komprimiert. Der eingeworfene Müll kann zu Pellets gepresst werden. Der derart komprimierte Müll kann, mittels eines Schleusenausgangs (hier nicht abgebildet), in einen darunter angeordneten Müllsammelbehälter 3 überführt werden.

Der Müllsammelbehälter 3 ist mobil gelagert und mit der Einhausung 4 koppelbar. Eine Kopplung kann über ein Einklinken in entsprechende Halterungen (hier aus Gründen der Übersichtlichkeit nicht dargestellt) an der Einhausung 4 erfolgen.

Im entkoppelten Zustand ist ein Entfernen des Müllsammelbehälters 3 aus der Müllsammelvorrichtung 10 und Entleeren des Müllsammelbehälters 3 möglich. Dabei wird ein Entsorgen des Mülls durch die an der Bodenfläche des Müllbehälters angebrachten Räder 5 erleichtert.

Die Figur 2 zeigt eine Seitenansicht des ersten Ausführungsbeispiels. Für weitergehende Erläuterungen wird auf die Beschreibungen von Fig. 1 verwiesen.

In der Seitenansicht ist deutlich zu sehen, dass die Müllsammelvorrichtung 10 in einer Aussparung 11 an einem Fußweg 9 angeordnet ist. Dies erleichtert ein einfaches straßenseitiges Entsorgen des Müllsammelbehälters 10. Durch die Aussparung 11 in der ersten Oberfläche 9 ist es möglich einen Norm-Müllgroßbehälter mit Flachdeckel und Schüttvorrichtung als Müllsammelbehälter zu verwenden und dennoch ein Einwerfen des Mülls in einer nutzerfreundlichen Höhe zu gewährleisten.

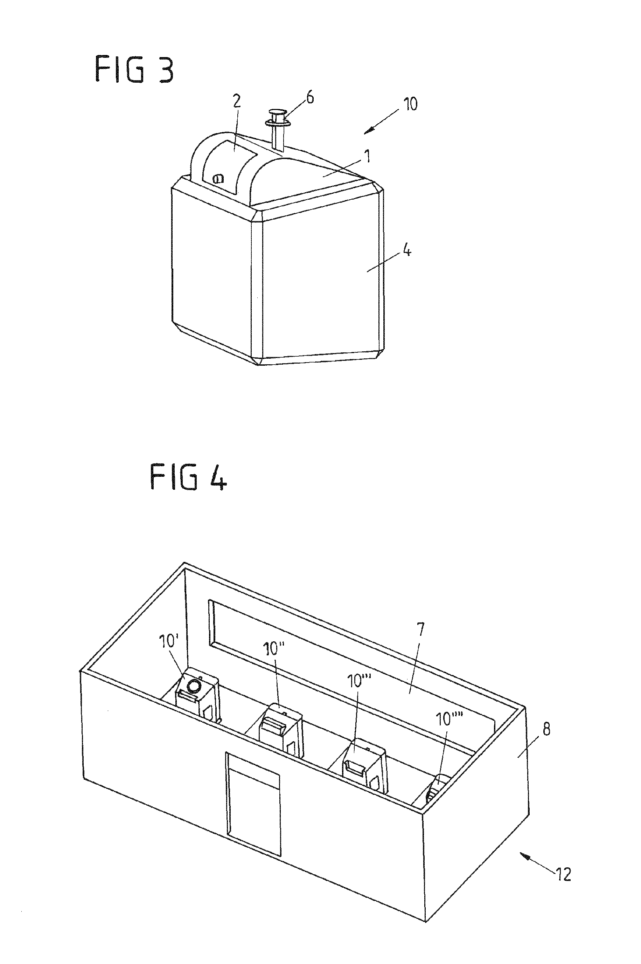

Die Figur 3 zeigt ein zweites Ausführungsbeispiel einer Müllsammelvorrichtung 10. Für weitergehende Erläuterungen wird auf die Beschreibungen von Fig. 1 verwiesen.

Der Schleusenkammerbehälter 1 ist in eine Einhausung 4 integriert und die Einhausung 4 umschließt den Müllsammelbehälter 3 vollständig.

Die Müllsammelvorrichtung 10 weist ein Verbindungselement 6 auf. Das Verbindungselement ermöglicht eine Verbindung der Müllsammelvorrichtung 10 mit einem externen Transportsystem. Beispielsweise kann dadurch der Müllsammelbehälter 3 oder die Müllsammelvorrichtung 10 mittels eines Krans transportiert werden.

Die Bodenfläche der Müllsammelvorrichtung 10 ist zu öffnen. Eine Öffnung kann durch Aufklappen erfolgen. Dadurch wird gewährleistet, dass die Entsorgung des Mülls auf einfache Art und Weise erfolgen kann. Die Müllsammelvorrichtung wird mittels eines Krans über einen Müllwagen gehoben und durch Entriegeln der Bodenfläche in den Müllwagen entleert.

Die Figur 4 zeigt einem Sammelraum 12 mit offenem Dach in dem Müllsammelvorrichtungen 10ʹ bis 10ʹʹʹʹ angeordnet sind. Eine Entsorgung kann (wie in Figur 3 beschrieben) mittels eines Krans erfolgen. Die Müllsammelvorrichtungen 10' bis 10"" sind im Sammelraum im Boden eingelassen (hier nicht dargestellt). Dies ermöglicht die Verwendung großer Müllsammelbehälter, ohne dabei einen großen Raumanspruch an der Oberfläche zu haben. Eine Lüftung des Sammelraumes erfolgt über die Öffnung 7.

## Patentansprüche

1. Schleusenkammerbehälter für die Aufnahme von Müll,
**gekennzeichnet durch**
eine integrierte Pressvorrichtung, die den eingeworfenen Müll in dem Schleusenkammerbehälter (1) komprimiert.

2. Schleusenkammerbehälter nach Anspruch 1
**dadurch gekennzeichnet, dass**
der Schleusenkammerbehälter (1) eine Trennungsvorrichtung für Feststoffe und Flüssigkeiten aufweist.

3. Schleusenkammerbehälter nach Anspruch 1 oder 2,
**dadurch gekennzeichnet, dass**
der Schleusenkammerbehälter (1) in eine Einhausung (4) integriert ist.

4. Schleusenkammerbehälter nach einem der vorhergehenden Ansprüche,
**dadurch gekennzeichnet, dass**
ein Schleusenkammerverschluss (2) des Schleusenkammerbehälters (1), die in den Schleusenkammerbehälter (1) integrierte Pressvorrichtung und ein Schleusenkammerausgang des Schleusenkammerbehälters (1) derart wirkverbunden sind, sodass
a) der Schleusenkammerverschluss (2) nur geöffnet werden kann, wenn der Schleusenkammerausgang geschlossen ist, und
b) der Schleusenkammerausgang nur geöffnet werden kann, wenn der Schleusenkammerverschluss (2) geschlossen ist,
und
c)die integrierte Pressvorrichtung nur betrieben werden kann, wenn der Schleusenkammerverschluss (2) und der Schleusenkammerausgang geschlossen sind.

5. Müllsammelvorrichtung,
**gekennzeichnet durch**
einen Müllsammelbehälter (3) mit angeordnetem Schleusenkammerbehälter nach Anspruch 1.

6. Müllsammelvorrichtung nach Anspruch 5,
**dadurch gekennzeichnet, dass**
die Müllsammelvorrichtung (10) von einer Einhausung (4) ganz oder teilweise umgeben ist.

7. Müllsammelvorrichtung nach Anspruch 5 oder 6
**dadurch gekennzeichnet, dass**
ein Müllsammelbehälter (3) mit der Einhausung (4) koppelbar ist.

8. Müllsammelvorrichtung nach einem der Ansprüche 5 bis 7,
**dadurch gekennzeichnet, dass**
der Müllsammelbehälter (3) und/oder die Einhausung (4) eine Höhenverstellungsvorrichtung aufweist.

9. Müllsammelvorrichtung nach einem der Ansprüche 5 bis 8,
**dadurch gekennzeichnet, dass**
der Müllsammelbehälter (3) ein- und ausfahrbare Bewegungselemente aufweist.

10. Müllsammelvorrichtung nach einem der Ansprüche 5 bis 9,
**dadurch gekennzeichnet, dass**
die Müllsammelvorrichtung (10) ein Führungssystem für den Müllsammelbehälter (3) aufweist.

11. Müllsammelvorrichtung nach einem der Ansprüche 5 bis 10,
**dadurch gekennzeichnet, dass**
die Öffnungen der Müllsammelvorrichtung (10) luftdicht verschließbar sind.

12. Müllsammelvorrichtung nach einem der Ansprüche 5 bis 11,
**dadurch gekennzeichnet, dass**
die Müllsammelvorrichtung (10) ein Verbindungselement (6) aufweist.

13. Müllsammelvorrichtung nach einem der Ansprüche 5 bis 12,
**dadurch gekennzeichnet, dass**
die Bodenfläche der Müllsammelvorrichtung (10) und/oder des Müllsammelbehälters (3) öffenbar ist.

14. Müllsammelvorrichtung nach einem der Ansprüche 5 bis 13,
**dadurch gekennzeichnet, dass**
die Müllsammelvorrichtung (10) oder Teile davon im Boden eingelassen sind.

15. Müllsammelvorrichtung nach einem der Ansprüche 5 bis 14,
**dadurch gekennzeichnet, dass**
die Müllsammelvorrichtung (10) in einem Sammelraum (12) mit offenem oder mobilem Dach angeordnet ist.
